# EUROPEAN PATENT SPECIFICATION

(11) **EP 0 539 085 B1**
(45) Date of publication and mention of the grant of the patent: **08.01.1997**
(21) Application number: 92309328.0
(22) Date of filing: 13.10.1992
(51) Int. Cl.: B28D 1/30, B24B 11/00, B28D 1/04

(54) **Procedure and means for machining stone**
Verfahren und Mittel zur Steinbearbeitung
Procédé et moyens d'usinage de la pierre

(30) Priority: 23.10.1991 FI 914999
(43) Date of publication of application: 28.04.1993
(73) Proprietor: Vainikka, Eero, SF-54800 Savitaipale (FI)
(72) Inventor: Vainikka, Eero, SF-54800 Savitaipale (FI)
(74) Representative: Simpson, Alison Elizabeth Fraser

(56) References cited:
- DE-A- 1 577 082
- DE-A- 2 238 020
- DE-A- 3 723 764
- FR-A- 2 630 035

## Description

The present invention concerns both a procedure and a means for machining stone to spherical shape. Specifically, the invention concerns the making of big globes from stone, the globe having a diameter within 0.5 to 3 m, advantageously 1 to 2 m.

Small round-shaped objects having diameters on the order of 10 cm are comparatively easy to manufacture, even of hard stone. The objects can be machined on a lathe in various ways, or a machining tool resembling a bung hole borer may be used, for instance.

However, problems arise when the diameter of the globe which one wishes to make grows to be larger than 0.5 m, because the blank has rather great weight, whereby its handling is difficult, and its fixing and rotating is nearly impossible in a conventional lathe. Further problems are due to the great quantity of stone material that has to be removed.

It seems that at the moment only one German stone-working company makes big stone globes of hard stone materials; their procedure for producing the globes obviously involves use of a hole plate. In such procedures a large plate having a round hole of which the rim is provided with cutting diamonds is rotated and turned around a stone blank, which has been sawn to present the shape of a round polyhedron, in such a way that the ultimate result is a smooth and round globe. The machining process is cumbersome and slow and, above all, highly expensive because the large diamond-studded hole plates cost several ten thousand FIM (thousands of pounds sterling) each. It is also a drawback of this technique that individual hole plates have to be provided for every size of globe which one plans to manufacture, and therefore the available assortment of cutter plates prescribe exactly those globe sizes which can be made. This means that a given stone blank may not necessarily be fully utilizable to make the largest possible globe: one can only make the largest globe within the selection determined by the set of cutter plates for which the stone will suffice, whereby the quantity of stone to be removed by machining from the blank increases significantly, implying added machining time and manufacturing cost.

FR-A-2 630 035 discloses apparatus for producing or polishing stone pieces with spherical surfaces. The apparatus comprises a supporting arc on which the machining tools are moveably mounted and a support on which the stone blank can be carried. DE-3 723 764 discloses a method of producing stone spheres. The method comprises the steps of cutting a series of spaced slots into a stone blank and removing the portions of stone between adjacent slots to form a substantially sphere shaped stone piece.

The object of the invention is to eliminate the above-mentioned drawbacks. The specific object of the invention is to disclose a novel procedure and means by the aid of which it is possible, from various big and massive stone blocks, to produce by machining a big globe, employing simple and inexpensive working methods and implements.

According to the present invention there is provided a method and an apparatus for machining stone as described in Claim 1 and Claim 5.

In the procedure of the invention for machining stone to assume spherical shape, a plurality of circular arc-shaped slots is machined in the stone, spaced from each other and with their bottoms substantially on the level of the spherical surface that is being produced, the intervening parts of the stone blank between said slots are removed, the stone blank of roughly round shape is ground to become perfectly round, and the region of the point where the stone blank was supported and which has received no treatment is machined down to the level of the rest of the spherical surface. As taught by the invention, the steps of machining the slots and of grinding the surface are accomplished with the aid of a machining cutter movable along a rigid supporting arc having the shape of a circular arc and located around the blank, while the blank is carried on a blank rest, and by rotating the blank resting on the blank rest and the supporting arc relative to each other about a vertical axis.

Advantageously, the supporting point region is machined to round shape in a manner similar to the machining of the rest of the spherical surface, i.e., in a first step slots are machined, the lands between slots are knocked off, and the region is thereafter ground to smooth finish. It is obviously also feasible to burnish the spherical surface to desired gloss on completed grinding.

In an embodiment of the invention, the stone blank is supported from below only, in which case the circular arcs produced by machining may be in excess of 300°, from the vicinity of the point of support all the way around the stone blank and to the side beyond the supporting point.

It is equally possible to support the stone blank on its opposite sides, i.e., from below and from above, in which case the machining takes place so that circular arcs of less than 180° are cut from the vicinity of one point of support to the vicinity of the other.

In the procedure of the invention the machine tool performing the machining may be stationary and the stone blank is rotated by means of a suitable power means about the vertical axis, or the stone blank may be held stationary and in that case the encircling machine tool will revolve around the stone blank about a vertical axis. It is equally possible to rotate both about one and the same vertical axis.

Since in the vicinity of the supporting points the slots come to lie comparatively close together and may in fact run together, one may also vary the length of the slots which are machined, so that for instance every second slot is machined as far as possible into the vicinity of the supporting point(s), while the beginning and end of every other slot is left farther away from the supporting point(s); this is conducive to savings in machining time and cutters. The spacing of the slots, as well as the making of incomplete slots as described, may vary in accordance with the hardness of the stone so that it will be convenient work to break off the foils between the slots in each instance.

The stone machining means of the invention comprises a support frame on which rests a supporting arc having the shape of a circular arc. The supporting arc carries a tool slide moving along it on a path shaped like a circular arc, various machining tools being mountable on the slide. The means further comprises a blank rest carried by the support frame, on which the stone blank which is going to be machined is arranged to rest so that the stone blank and the supporting arc can be rotated relative to each other about a joint vertical axis.

Advantageously, the blank rest is adjustable in height so that it is possible in every instance to position the stone blank with highest possible accuracy in the centre of curvature of the supporting arc, so that the largest possible globe can be made of the particular stone blank. The blank rest may be a hydraulic cylinder, or another piston-like member, which is in one way or another securely lockable on desired height.

In an embodiment of the invention the supporting arc is a circular arc of about 180°, in which case it comprises on its upper end a top rest resting against the stone blank. The stone blank is then supported on its opposite sides by the supporting arc, and the stone blank and supporting arc are rotatable relative to each other about a vertical axis defined by the blank rest and the top rest.

It is equally conceivable that the supporting arc is a ring of circular shape, encircling the stone blank, in which case the stone blank may be supported by the blank rest alone or by a top rest as well. If the stone blank is supported by the blank rest only, the machining of the stone blank can be done in the form of circular arcs in excess of 300°, around the stone blank. It should also be noted that it is possible in the interest of faster machining, to use two or more tool slides on the supporting arc simultaneously, whereby the machining rate increases in proportion.

The advantage of the procedure and means of the invention over prior art is that big globes can be made of stone with the aid of the invention without special tools and cutters since the cutting of slots can be accomplished with conventional diamond cutter wheels, e.g. with an annular tool which is rotated and moved towards the spherical surface. Hereby the cutting tool costs incurred in manufacturing big globes of hard stone materials by the procedure and means of the invention are brought down to a fraction of what they are at present.

In the following the invention is described in detail with reference to the attached drawing, wherein
Fig. 1 presents, schematically, a means according to the invention,
Fig. 2 presents, schematically, another means according to the invention, and
Fig. 3 presents a partly machined stone blank.

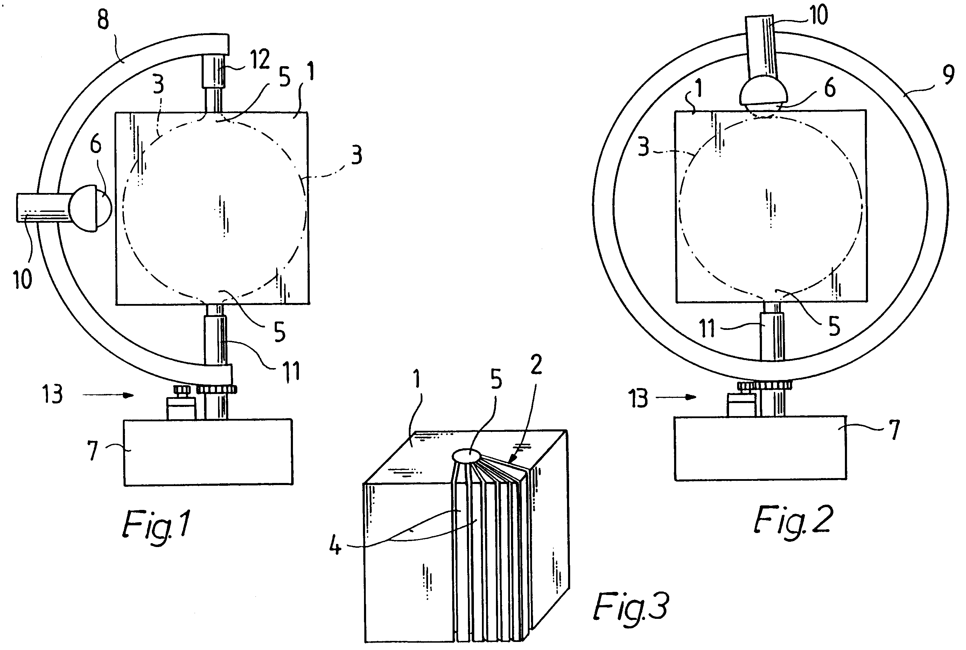

The means according to the embodiment of Fig. 1 comprises a support frame 7 giving support to a blank rest 11 and to a supporting arc 8. The supporting arc 8 extends in the shape of a circular arc to the other side of the stone blank 1 which is meant to be machined, i.e., to its top side, where it rests on the top surface of the stone blank by means of a top rest 12.

The blank rest consists of a piston-like pin, adjustable in its height and lockable in place, on which the stone blank 1 is substantially centrally carried. The top rest 12 consists e.g. of a hydraulic or pneumatic cylinder and piston, which is urged against the top surface of the stone blank. Hereby, the top rest and the blank rest in combination define a vertical axis about which the stone blank can be rotated, or about which the means encircling the stone blank can be rotated.

The supporting arc 8 having the shape of a semicircle arc comprises a tool slide 10, which is movable with the aid of a suitable power means along the supporting arc, from end to end thereof. On the tool slide 10 is mounted a cutting wheel 6, or another appropriate machining tool, depending on the machining to be done. The location of the tool slide 10 on the supporting arc 8, in the radial direction of this arc, is adjustable in accordance with the size of the globe that is being made in each instance of the stone blank 1. The means furthermore comprises a power means 13 by the aid of which the supporting arc 8 can be turned around the vertical axis relative to the stone blank 1, or the stone blank 1 can be turned about the vertical axis relative to the supporting arc 8.

In Fig. 2 is depicted another embodiment of the invention. It is otherwise equivalent to the means of Fig. 1, except that the stone blank 1 is not supported from above by the supporting arc, and the supporting arc 9 consists of a circular frame. The tool slide 10 can now be moved along the supporting arc 9 from a position close to the blank rest 11 and over more than 300°, to the vicinity of the blank rest on the other side thereof. In this embodiment, too, the alternatives are to rotate the stone blank 1 relative to the supporting arc 9 or to rotate the supporting arc 9 relative to the stone blank 1, about the vertical axis.

The means according to the invention, depicted in the drawing, are employed as follows. The stone blank 1 is lifted and arranged to rest, substantially centrally, on the blank rest 11 and raised to such height that the centre of the globe that is going to be machined from the stone blank will coincide with the centre of curvature of the supporting arc 8 or 9.

It is possible by examining the stone blank, to decide how large a globe can be made of it, or if a globe of given size is wanted, the tool slide 10 is adjusted radially into proper position relative to the supporting arc, and a diamond cutting wheel 6 is mounted thereon; the diamond wheel is thereafter operated to saw in the stone blank 1 side-by-side slots 2 so that the bottoms 3 of the slots run substantially along the surface of the globe to be made. The slots are machined by moving the tool slide 10 through the whole path allowed by the supporting arc, at which the cutter wheel will cut in the stone blank a slot which is circular of its bottom. After the cut, either the supporting arc or the stone blank is turned, depending on the size of the stone blank, e.g. 5 to 10° and another cut is made. This is repeated all round the stone blank, thereby producing leaf-like lands 4 between the slots, these lands being removable by wedging, hammering or striking in any other way, whereafter the stone blank will have become a roughly round-shaped object.

Next, a suitable grinding tool is mounted on the tool slide 10, e.g. an annular diamond cutter, apposing the entire diamond cutter ring thereof, diameter e.g. 10 to 30 cm, against the stone surface.

The round stone that has been ground is then lifted off the blank rest 11 and upon said blank rest is placed an annular or cup-shaped rest, and the round stone is turned in such manner that a ground, round portion of the spherical surface is received by the cup-like rest. The globe is disposed in this position, to be at its original machining height, or the size of the cup-shaped rest is selected to maintain the globe automatically at correct machining height. The next step consists of machining the supporting point areas 5 which have been left in the machining step, one or two depending on the embodiment, in similar manner to become a round-shaped spherical surface. It is obviously feasible, if there is rather little machining to be done in the supporting point regions, to grind these areas straight away, omitting the coarse machining with the cutter wheel. It is advantageous to use for said cup-like rest, a cup consistent with the curvature of the globe to be produced and on the bottom of which opens a water conduit, whereby water pressure of appropriate height can be applied to lift the smooth-surfaced globe to be borne on a water film, thus facilitating the machining of the globe's poles and its turning.

After the globe, in ground condition, has acquired exact spherical shape, it may be burnished to high gloss with a burnishing implement mounted on the tool slide 10, using conventional burnishing implements.

The invention has been described in the foregoing by way of example with the aid of the drawings hereto attached, while various embodiments of the invention are conceivable within the scope of the inventive idea delimited by the claims.

## Claims

1. A procedure for machining stone to a globe shape, comprising the steps of:-
machining into a stone blank (1) a plurality of mutually spaced slots (2) with the shape of a circular arc, the bottoms (3) of said slot being substantially on a level of the surface of the globe which is being produced;
removing the portions (4) of the stone blank between the slots;
grinding the substantially round-shaped stone blank, to become round; and
machining down the region of the supporting point of the stone blank, which has remained untreated, to the level of the rest of the spherical surface, characterized in that the stone blank (1) is supported on two opposing sides and machining of the slots (2) and grinding of the surface are accomplished with a machining cutter travelling along a rigid supporting arc (9) extending 180 degrees from the vicinity of the first supporting point to the vicinity of the opposing supporting point and by rotating the blank, resting on said supporting points and the supporting arc (9) relative to each other about a vertical axis.

2. A procedure according to claim 1, characterized in that the supporting point regions (5) are machined to a round shape in a manner similar to that used for the rest of the spherical surface.

3. A procedure according to claims 1 or 2, characterized in that the slots (2) are cut using a cutter wheel (6) and rotating the stone blank (1) and the machine tool stepwise relative to each other.

4. A procedure according to any one of claims 1-3, characterized in that each region (5) around the point of support of the stone blank (1) is removed by turning it into a machining position in which the location of the stone blank's centre remains unchanged.

5. Apparatus for machining stone into a globe shape, comprising a support frame (7), a supporting arc (8,9) a tool slide (10) movable along said supporting arc and on which the machining cutters can be mounted, and a supporting point (11) carried on the support frame and upon which the stone blank (1) to be machined is carried rotatably about a vertical axis, relative to the supporting arc, characterized in that the supporting arc (8) is a 180-degree semi-circular arc, and is provided at a first end with a first supporting point (11) and at a second end with a second supporting point (12), said supporting points being adapted to rest against opposing sides of the stone blank (1) so that the stone blank and the supporting arc are rotatable relative to each other about a vertical axis defined by the blank rest and the second supporting point (2).

6. Apparatus according to claim 5, characterized in that the supporting point (11) is adjustable in height for positioning the stone blank (1) in the centre of the supporting arc (8,9).

7. Apparatus according to claims 5 or 6 characterized in that the first supporting point is provided with an annular or cup-shaped intermediate rest upon which a globe that has not been machined of its supporting point region can be carried without incurring any change of the position of its centre relative to the supporting arc.

## Patentansprüche

1. Ein Verfahren zum maschinellen Bearbeiten von Stein zur Kugelform umfassend die Schritte:
Maschinelles Einarbeiten einer Mehrzahl zueinander beabstandeter Schlitze (2) mit der Form eines Kreisbogens in einen Steinrohling (1), wobei die Böden (3) der Schlitze sich im wesentlichen auf dem Niveau der Oberfläche der herzustellenden Kugel befinden;
Entfernen der Teile (4) des Steinrohlings zwischen den Schlitzen;
Schleifen des im wesentlichen rund geformten Steinrohlings zu einer runden Form; und
maschinelles Abarbeiten des Bereiches des Stützpunktes des Steinrohlings, der unbehandelt geblieben ist, auf das Niveau der übrigen sphärischen Oberfläche, dadurch gekennzeichnet, daß der Steinrohling (1) an zwei gegenüberliegenden Seiten gestützt wird und die maschinelle Bearbeitung der Schlitze (2) und das Schleifen der Oberfläche mit einem maschinellen Schneidwerkzeug ausgeführt werden, das sich entlang eines starren Stützbogens (9) bewegt, der sich über einen Winkel von 180° von der Umgebung des ersten Stützpunktes zu der Umgebung des gegenüberliegenden Stützpunktes erstreckt und durch Rotation des Rohlings, der auf den besagten Stützpunkten ruht, und des Stützbogens relativ zueinander um eine vertikale Achse.

2. Ein Verfahren gemäß Anspruch 1, dadurch gekennzeichnet, daß die Bereiche (5) der Stützpunkte in einer zu der für die übrige sphärische Oberfläche verwendeten ähnlichen Art und Weise maschinell in eine runden Form bearbeitet werden.

3. Ein Verfahren gemäß Anspruch 1 oder 2, dadurch gekennzeichnet, daß die Schlitze (2) mit einem Schneidrad (6) und unter Rotation des Steinrohlings (1) und des Werkzeugs schrittweise relativ zueinander geschnitten werden.

4. Ein Verfahren nach einem der Ansprüche 1 bis 3, dadurch gekennzeichnet, daß jeder Bereich (5) um den Stützpunkt des Steinrohlings (1) entfernt wird, indem der Rohling in eine Position zur Bearbeitung gedreht wird, in der das Zentrum des Steinrohlings unverändert bleibt.

5. Vorrichtung zum maschinellen Bearbeiten von Steinen in eine Kugelform, umfassend einen Stützbock (7), einen Stützbogen (8,9), einen Werkzeugschlitten (10), beweglich entlang des Stützbogens und auf dem die Schneidwerkzeuge für die maschinelle Bearbeitung lagerbar sind, und einen Stützpunkt (11), der auf dem Stützblock getragen ist und auf dem der zu bearbeitende Steinrohling (1) um eine vertikale Achse relativ zu dem Stützbogen rotierbar ist, getragen wird, dadurch gekennzeichnet, daß der Stützbogen (8) ein 180° halbkreisförmiger Bogen und an einem Ende mit einem ersten Stützpunkt (11) und an einem zweiten Ende mit einem zweiten Stützpunkt (12) versehen ist, wobei die Stützpunkte so angepaßt sind, daß sie gegen entgegengesetzte Seiten des Steinrohlings (1) ruhen, so daß der Steinrohling und der Stützbogen relativ zueinander um eine vertikale Achse rotierbar sind, die durch den Rohlingshalter und den zweiten Stützpunkt (2) definiert ist.

6. Vorrichtung nach Anspruch 5, dadurch gekennzeichnet, daß der Stützpunkt (11) in der Höhe einstellbar ist, um den Steinrohling (1) im Zentrum des Stützbogens (8,9) zu positionieren.

7. Vorrichtung nach Anspruch 5 oder 6, dadurch gekennzeichnet, daß der erste Stützpunkt mit einem ring- oder becherförmigen Zwischenhalter versehen ist, auf dem eine Kugel, welche nicht im Bereich des Stützpunktes bearbeitet wurde, ohne irgendeine Veränderung der Lage ihres Zentrums relativ zum Stützbogen getragen werden kann.

## Revendications

1. Procédé d'usinage de la pierre pour lui donner la forme d'un globe, comprenant les étapes consistant:
à creuser dans un bloc de pierre taillé (1) une multiplicité de gorges (2) espacées mutuellement, ayant la forme d'un arc de cercle, les fonds (3) desdites gorges étant sensiblement au niveau de la surface du globe qui doit être produit;
à enlever les parties (4) du bloc de pierre taillé entre les gorges;
à meuler le bloc de pierre de forme sensiblement arrondie pour qu'il devienne rond; et
à enlever par usinage la région du point de support du bloc de pierre taillé, qui n'a pas subi de façonnage, jusqu'au niveau du reste de la surface sphérique,
caractérisé en ce que le bloc de pierre taillé (1) est supporté sur deux côtés opposés, et en ce que le creusement des gorges (2) et le meulage de la surface sont effectués avec un outil d'usinage qui se déplace le long d'un arc porteur rigide (9) s'étendant sur 180° depuis le voisinage du premier point de support jusqu'au voisinage du point de support opposé, et en faisant tourner le bloc taillé, qui repose sur lesdits points de support, et l'arc porteur (9) l'un par rapport à l'autre autour d'un axe vertical.

2. Procédé selon la revendication 1, caractérisé en ce qu'il est donné par usinage une forme ronde aux régions (5) des points de support d'une manière semblable à ce qui est pratiqué pour le reste de la surface sphérique.

3. Procédé selon la revendication 1 ou 2, caractérisé en ce que les gorges (2) sont creusées en utilisant une molette couteau (6) et en faisant tourner le bloc de pierre taillé (1) et l'outil d'usinage pas à pas l'un par rapport à l'autre.

4. Procédé selon l'une quelconque des revendications 1 à 3, caractérisé en ce que, pour enlever chaque région (5) autour du point de support du bloc de pierre taillé (1), on l'amène par rotation dans une position d'usinage dans laquelle la situation du centre du bloc de pierre taillé reste la même.

5. Dispositif d'usinage de la pierre pour lui donner la forme d'un globe, comprenant un bâti de support (7), un arc porteur (8,9), un chariot porte-outil (10) qui est mobile le long dudit arc porteur et sur lequel les outils d'usinage peuvent être montés, et un point de support (11) qui est monté sur le bâti de support et sur lequel la bloc de pierre taillé (1) a usiner est supporté de manière à pouvoir tourner autour d'un axe vertical par rapport à l'arc porteur, caractérisé en ce que l'arc porteur (8) est un arc demi-circulaire de 180° et est muni, a une première extrémité, d'un premier point de support (11) et, à une seconde extrémité, d'un second point de support (12), lesdits points de support étant agencés de manière à s'appliquer contre des côtés opposés du bloc de pierre taillé (1), de sorte que le bloc de pierre taillé et l'arc porteur puissent tourner l'un par rapport à l' autre autour d' un axe vertical défini par le reste du bloc taillé et le second point de support (12).

6. Dispositif selon la revendication 5, caractérisé en ce que le point de support (11) est réglable en hauteur, de sorte que le bloc de pierre taillé (1) puisse être placé au centre de l'arc porteur (8,9).

7. Dispositif selon la revendication 5 ou 6, caractérisé en ce que le premier point de support est muni d'une pièce d'appui intermédiaire annulaire ou en forme de ouvette, sur laquelle un globe qui n'a pas été usiné dans la région de son point de support peut être supporté sans que cela entraîne un changement de la position de son centre par rapport à l'arc porteur.
